# EUROPEAN PATENT APPLICATION

(11) **EP 2 014 963 A2**
(43) Date of publication of application: **14.01.2009**
(21) Application number: 08012431.6
(22) Date of filing: 09.07.2008
(51) Int. Cl.: F16K 17/04

(54) **A pressure relief valve and a method for regulating pressure**

(30) Priority: 09.07.2007 US 774737
(71) Applicant: Odis Irrigation Equipment Limited, Petach Tikva 49130 (IL)
(72) Inventor: Bomze, Vladimir, Hadera 38236 (IL)
(74) Representative: Grünecker, Kinkeldey, Stockmair & Schwanhäusser Anwaltssozietät

(57) **Abstract**

A pressure relief value (20), including: a housing that includes an upper portion (11) and a lower portion (12); wherein the lower portion (12) of the housing includes an inlet (4), an outlet (13), a diaphragm stopper (14) and a fluid stopper (15); a spring (7), positioned within a first chamber (16) that is surrounded by the upper portion (11) of the housing; wherein a low end of the spring is adapted to contact an upper part of a diaphragm and apply a downward pressure on the diaphragm; a diaphragm adapted to axially move within the housing; wherein the diaphragm and the lower portion of the housing (12) define a fluid chamber (8); wherein while a pressure level of fluid that enters the fluid chamber (8) via the inlet (4) is below a predefined threshold the upper part of the diaphragm contacts the diaphragm stopper (14) and a lower edge of the diaphragm contacts the fluid stopper (15) such as to prevent fluid from flowing through the outlet (13); wherein when a pressure level of the fluid exceed the predefined threshold the diaphragm immediately moves upwards and fluid flows from the inlet (4), via a space formed between the diaphragm and the fluid stopper (15) and through the outlet (13); and wherein an area of the lower edge of the diaphragm is substantially smaller that an area of a portion of the diaphragm that is subjected to upward pressure imposed by fluid located within the fluid chamber (8).

## Description

### Field of the invention

The invention relates to a pressure relief valve and a method for regulating pressure.

### Background of the invention

Filtrating of liquids is a common practice in many industries and in everyday life, wherein the filtrating is typically carried out by filters and filtering units made for this purpose. The filtrating of liquids typically includes separating contaminants from unfiltered liquid, to provide filtered liquid.

Filtration systems are adapted to manage fluids at certain pressure levels. Pressure relief valves regulate the pressure levels within these systems. Pressure relief valves can be also used in other systems.

Some prior art pressure relief valves included a diaphragm that is induced to move at a first direction by the fluid that can flow through a narrow inlet located at the bottom of the valve. The diaphragm is induced to move at an opposite direction by a spring. Typically, only a very small diaphragm edge contacts the fluid when the valve is "closed". Due to the small area of that diaphragm edge the pressure relief valve responds relatively slowly and in a gradual manner to pressure level increments above a predefined pressure threshold.

There is a need to provide a pressure relief valve that can quickly respond to pressure level changes and have an almost binary response.

### Summary of the invention

A pressure relief value that includes: a housing a spring and a diaphragm. The housing includes an upper portion and a lower portion. The lower portion of the housing includes an inlet, an outlet, a diaphragm stopper and a fluid stopper. The spring is positioned within a first chamber that is surrounded by the upper portion of the housing. A low end of the spring is adapted to contact an upper part of a diaphragm and apply a downward pressure on the diaphragm. The diaphragm can axially move within the housing. The diaphragm and the lower portion of the housing define a fluid chamber. While a pressure level of fluid that enters the fluid chamber via the inlet is below a predefined threshold the upper part of the diaphragm contacts the diaphragm stopper and a lower edge of the diaphragm contacts the fluid stopper such as to prevent fluid from flowing through the outlet. When a pressure level of the fluid exceed the predefined threshold the diaphragm immediately moves upwards and fluid flows from the inlet, via a space formed between the diaphragm and the fluid stopper and through the outlet. The area of the lower edge of the diaphragm is substantially smaller that an area of a portion of the diaphragm that is subjected to upward pressure imposed by fluid located within the fluid chamber.

A method for regulating pressure, the method includes: (a) receiving fluid via an inlet of a pressure relief value; wherein the pressure relief valve includes: (i) a housing that includes an upper portion and a lower portion, the lower portion of the housing includes the inlet, an outlet, a diaphragm stopper and a fluid stopper; (ii) a spring, positioned within a first chamber that is surrounded by the upper portion of the housing; wherein a low end of the spring is adapted to contact an upper part of a diaphragm and apply a downward pressure on the diaphragm; and (iii) a diaphragm adapted to axially move within the housing; the diaphragm and the lower portion of the housing define a fluid chamber; an area of the lower edge of the diaphragm is substantially smaller that an area of a portion of the diaphragm that is subjected to upward pressure imposed by fluid located within the fluid chamber; (b) preventing the fluid from flowing through the outlet while a pressure level of the fluid that enters the fluid chamber via the inlet is below a predefined threshold; wherein the preventing includes contacting the diaphragm stopper by the upper part of the diaphragm and contacting the lower edge of the diaphragm to contact the fluid stopper; (c) allowing the fluid to flow from the inlet via a space formed between the diaphragm and the fluid stopper and through the outlet immediately after the pressure level of the fluid exceed the predefined threshold.

### Brief description of the drawings

The foregoing and other objects, features, and advantages of the present invention will become more apparent from the following detailed description when taken in conjunction with the accompanying drawings. In the drawings, similar reference characters denote similar elements throughout the different views, in which:

Figure 1 illustrates a cross-section view of a pressure relief value, according to an embodiment of the invention;

Figure 2 illustrates a three dimensional view of a pressure relief value, according to an embodiment of the invention;

Figure 3 illustrates a lower edge of a diaphragm and a fluid stopper of a housing when fluid is allowed to flow through an outlet, according to an embodiment of the invention; and

Figure 4 is a flow chart of a method for regulating pressure, according to an embodiment of the invention.

### Detailed description of the drawings

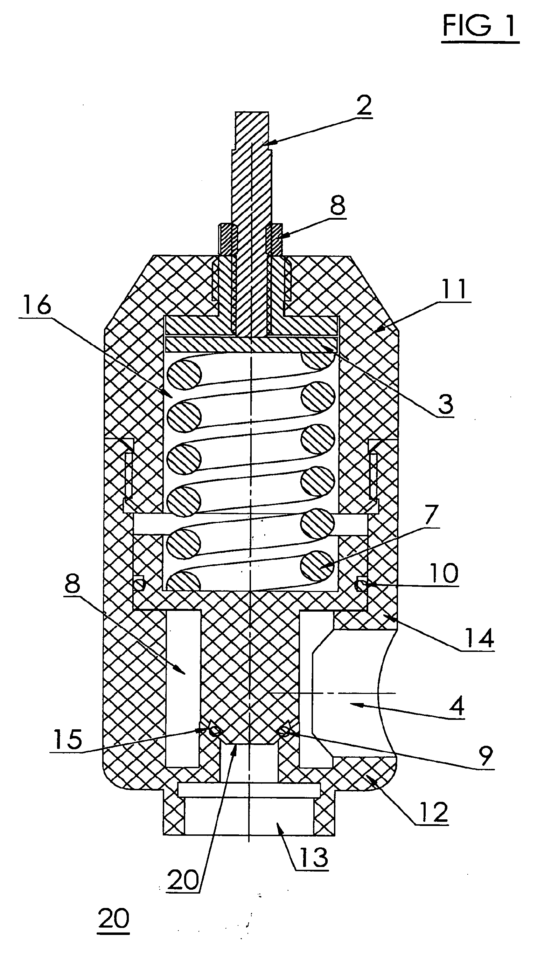

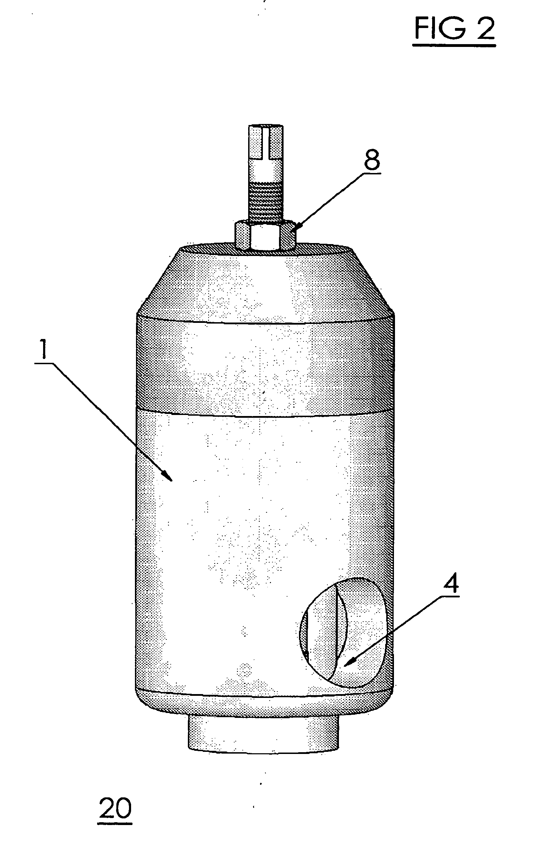

Figure 1 illustrates a cross-section view of pressure relief value 20, according to an embodiment of the invention and Figure 2 illustrates a three dimensional view of pressure relief value 20, according to an embodiment of the invention.

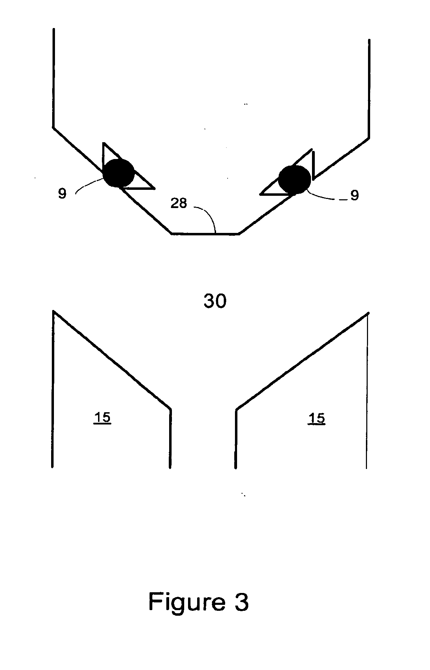

Figure 1 illustrates the pressure relief valve 20 when it is "closed" while figure 3 illustrates a portion of pressure relief valve when the valve is "opened".

Pressure relief value 20 includes: housing 1, spring 7 and diaphragm 12.

Housing 1 includes upper portion 11 and lower portion 12. Lower portion 25 includes inlet 4, outlet 13, diaphragm stopper 14 and fluid stopper 15.

Spring 7 is positioned within a sealed chamber 16 (also referred to as first chamber) that is surrounded by upper portion 12 of housing 1. A low end of spring 7 is adapted to contact an upper part of diaphragm 12 and apply a downward pressure on diaphragm 12.

Diaphragm 12 is adapted to axially move (upwards or downwards) within housing 1. Diaphragm 12 and lower portion 25 of housing 1 define fluid chamber 18.

While a pressure level of fluid that enters fluid chamber 18 (via inlet 4) is below a predefined threshold the upper part of diaphragm 12 contacts diaphragm stopper 14 and a lower edge 28 of diaphragm 12 contacts fluid stopper 15 such as to prevent fluid from flowing through outlet 13.

When a pressure level of the fluid (within fluid chamber 18) exceeds the predefined threshold diaphragm 12 immediately moves upwards and fluid flows from inlet 4, via a space formed between diaphragm 12 and fluid stopper 15 and through outlet 13. This scenario is illustrated in figure 3.

An area of the lower edge 28 of diaphragm 12 is substantially smaller that an area of a portion 22 of diaphragm 20 that is subjected to upward pressure imposed by fluid located within fluid chamber 18.

Conveniently, the area of lower edge 28 is smaller than half of the area of portion 22. According to an embodiment of the invention the area of lower edge 28 is smaller than one third of the area of portion 22.

Inlet 4 is located at the sidewall of housing 1 while outlet 13 is located at the bottom of housing 1. Accordingly, inlet 1 enables radial flow of fluid through the inlet while outlet 13 is formed such as to enable axial flow of fluid through the outlet.

Conveniently, inlet 4 is much larger than outlet 13.

Conveniently, at least one seals (such as O-rings) are introduced in order to prevent leakage of fluid from fluid chamber to first chamber and, additionally or alternatively, to prevent fluid leakage from fluid chamber 18 towards outlet 13 when the valve is supposed to be "closed". First seal 9 is located between the lower edge of diaphragm 12 and fluid stopper 15. Second seal 10 is located between diaphragm 12 and housing 1.

According to an embodiment of the invention pressure relief value 20 includes a predefined threshold adjustor that affects a location of an upper end of spring 7. The predefined threshold adjustor includes disk 3 that is connected to an axis that is received by a screw nut 8 that is connected to housing 1.

According to an embodiment of the invention the lower edge 28 of the diaphragm 12 has a truncated conical shape.

Figure 3 illustrates lower edge 28 of diaphragm 12 and fluid stopper 15 of housing 1 when fluid is allowed to flow through outlet 13, according to an embodiment of the invention.

When the pressure level of fluid exceeds the predefined threshold fluid diaphragm immediately is lifted thus allowing fluid to flow through space 30 that is formed between fluid stopper 15 and lower edge 28 of diaphragm 12.

In operation, fluid flows into fluid chamber 11 from inlet 4 which is situated on the lower side of the pressure valve housing 1. The fluid exerts pressure against the relatively large surface of diaphragm 12, thus allowing for increased pressure sensitivity and valve reaction.

Spring 7 is situated inside a sealed chamber (referred to as first chamber) 14, and is compressed when fluid exerts pressure against the large side-contact area of diaphragm 12. The spring is stopped as it exerts pressure against stop disc 3, which, in turn, can be adjusted manually via pressure adjuster screw 2 for desired pressure level.

As pressure increases inside fluid chamber 11 above a predefined threshold, the diaphragm 12 is quickly shifted upward, thus effectively compressing spring 7 against stop disc 3, without necessitating gradual pressure build-up. The entry of fluid from the side onto the diaphragm 12 allows for quick pressure build-up, causing precise and full pressure release.

The released fluid pressure is expelled via a space formed between diaphragm 12 and fluid stopper chamber and towards outlet 13 that is situated on the bottom end of housing 1, and is released immediately, without gradual fluid expulsion.

When pressure below the predefined threshold is exerted against the diaphragm 12, the valve is closed via backward pressure of spring 7, and there is no counter pressure to cause the valve to open.

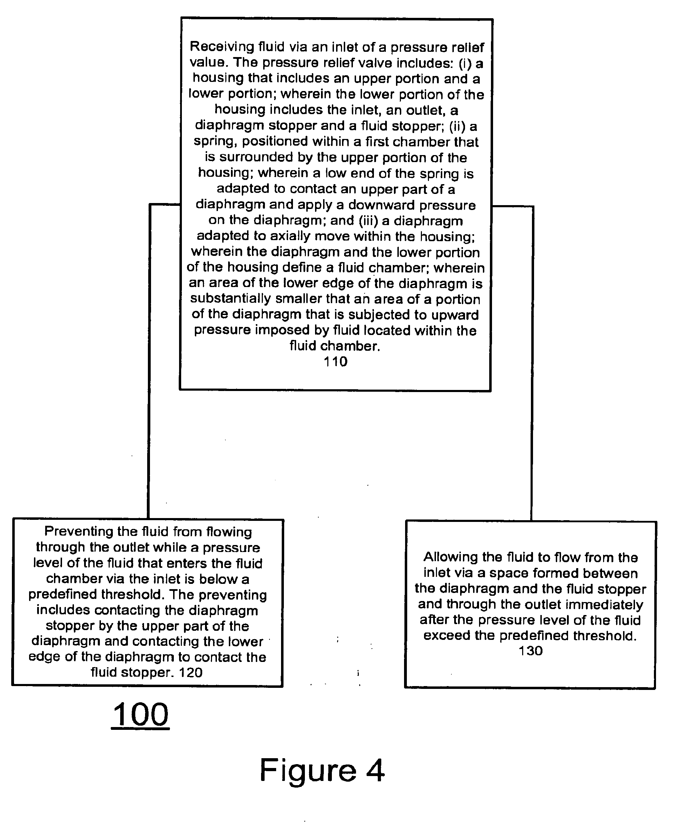

Figure 4 is a flow chart of method 100 for regulating pressure, according to an embodiment of the invention.

Method 100 starts by stage 110 of receiving fluid via an inlet of a pressure relief value. The pressure relief valve includes: (i) a housing that includes an upper portion and a lower portion; wherein the lower portion of the housing includes the inlet, an outlet, a diaphragm stopper and a fluid stopper; (ii) a spring, positioned within a first chamber that is surrounded by the upper portion of the housing; wherein a low end of the spring is adapted to contact an upper part of a diaphragm and apply a downward pressure on the diaphragm; and (iii) a diaphragm adapted to axially move within the housing; wherein the diaphragm and the lower portion of the housing define a fluid chamber; wherein an area of the lower edge of the diaphragm is substantially smaller that an area of a portion of the diaphragm that is subjected to upward pressure imposed by fluid located within the fluid chamber.

Stage 110 is followed by stage 120 and 130, depending upon the pressure level of the fluid within the fluid chamber.

Stage 120 includes preventing the fluid from flowing through the outlet while a pressure level of the fluid that enters the fluid chamber via the inlet is below a predefined threshold. The preventing includes contacting the diaphragm stopper by the upper part of the diaphragm and contacting the lower edge of the diaphragm to contact the fluid stopper.

Stage 130 includes allowing the fluid to flow from the inlet via a space formed between the diaphragm and the fluid stopper and through the outlet immediately after the pressure level of the fluid exceed the predefined threshold.

Method 100 can be executed by pressure relief valve 20 of figures 1-3. Accordingly, either one of the following or a combination thereof can be fulfilled: (i) the area of the lower edge of the diaphragm is smaller than half of the area of the portion of the diaphragm that is subjected to upward pressure imposed by fluid located within the fluid chamber; (ii) the area of the lower edge of the diaphragm is smaller than one third of the area of the portion of the diaphragm that is subjected to upward pressure imposed by fluid located within the fluid chamber; (iii) the inlet is formed such as to enable radial flow of fluid through the inlet while the outlet is formed such as to enable axial flow of fluid through the outlet; (iv) the inlet is much larger than the outlet; (v) stage 120 of preventing includes preventing fluid from flowing through the outlet by a first seal located between the lower edge of the diaphragm and the fluid stopper; (vi) method 100 further includes preventing fluid from flowing from the fluid chamber to the first chamber by a second seal adapted to seal the fluid chamber from the first chamber; (vii) method 100 includes adjusting the predefined threshold by utilizing a predefined threshold adjustor that affects a location of an upper end of the spring; (viii) method 100 includes determining a location of a disk that is connected to a screw; (ix) method 100 includes preventing fluid to flow by a lower edge of the diaphragm that has a truncated conical shape.

The present invention can be implemented by employing conventional tools, methodology and components. Accordingly, the details of such tools, components and methodology are not set forth herein in detail. In the above descriptions, numerous specific details are set forth, in order to provide a thorough understanding of the present invention. However, it should be recognized that the present invention might be practiced without resorting to the details specifically set forth.

Only few elucidatory embodiments of the present invention and but a few examples of its versatility are shown and described in the present disclosure. It is to be understood that the present invention is capable of use in various other combinations and environments and is capable of changes or modifications within the scope of the inventive concept as expressed herein.

## Claims

1. A pressure relief value, comprising:
a housing that comprises an upper portion and a lower portion; wherein the lower portion of the housing comprises an inlet, an outlet, a diaphragm stopper and a fluid stopper;
a spring, positioned within a first chamber that is surrounded by the upper portion of the housing; wherein a low end of the spring is adapted to contact an upper part of a diaphragm and apply a downward pressure on the diaphragm;
a diaphragm adapted to axially move within the housing;
wherein the diaphragm and the lower portion of the housing define a fluid chamber;
wherein the diaphragm is adapted so that when a pressure level of fluid that enters the fluid chamber via the inlet is below a predefined threshold the upper part of the diaphragm contacts the diaphragm stopper and a lower edge of the diaphragm contacts the fluid stopper, such as to prevent fluid from flowing through the outlet;
wherein the diaphragm is further adapted so that when a pressure level of the fluid exceeds the predefined threshold, the diaphragm immediately moves upwards and fluid flows from the inlet, via a space formed between the diaphragm and the fluid stopper and through the outlet; and
wherein an area of the lower edge of the diaphragm is substantially smaller that an area of a portion of the diaphragm that is subjected to upward pressure imposed by fluid located within the fluid chamber.

2. The pressure relief valve according to claim 1 wherein the area of the lower edge of the diaphragm is smaller than half of the area of the portion of the diaphragm that is subjected to upward pressure imposed by fluid located within the fluid chamber.

3. The pressure relief valve according to claim 1 wherein the area of the lower edge of the diaphragm is smaller than one third of the area of the portion of the diaphragm that is subjected to upward pressure imposed by fluid located within the fluid chamber.

4. The pressure relief valve according to any one of claims 1 to 3 wherein the inlet is formed such as to enable radial flow of fluid through the inlet while the outlet is formed such as to enable axial flow of fluid through the outlet.

5. The pressure relief valve according to any one of claims 1 to 4 wherein the inlet is much larger than the outlet.

6. The pressure relief valve according to any one of claims 1 to 5 further comprising a first seal located between the lower edge of the diaphragm and the fluid stopper.

7. The pressure relief valve according to any one of claims 1 to 6 further comprising a second seal adapted to seal the fluid chamber from the first chamber.

8. The pressure relief value according to any one of claims 1 to 7 further comprising predefined threshold adjustor that affects a location of an upper end of the spring.

9. The pressure relief value according to claim 8 wherein the predefined threshold adjustor comprises a disk that is connected to a screw.

10. The pressure relief valve according to any one of claims 1 to 9 wherein the lower edge of the diaphragm has a truncated conical shape.

11. A method for regulating pressure, the method comprises:
receiving fluid via an inlet of a pressure relief value; wherein the pressure relief valve is as claimed in any one of claims 1 to 10,
preventing the fluid from flowing through the outlet while a pressure level of the fluid that enters the fluid chamber via the inlet is below a predefined threshold by contacting the diaphragm stopper by the upper part of the diaphragm and contacting the lower edge of the diaphragm to contact the fluid stopper;
allowing the fluid to flow from the inlet via a space formed between the diaphragm and the fluid stopper and through the outlet immediately after the pressure level of the fluid exceed the predefined threshold.

12. The method according to claim 11 wherein the preventing comprises preventing fluid from flowing through the outlet by a first seal located between the lower edge of the diaphragm and the fluid stopper.

13. The method according to claim 11 or 12 further comprising preventing fluid from flowing from the fluid chamber to the first chamber by a second seal adapted to seal the fluid chamber from the first chamber.

14. The method according to any one of claims 11 to 14 further comprising adjusting the predefined threshold by utilizing a predefined threshold adjustor that affects a location of an upper end of the spring.

15. The method according to claim 14 wherein the adjusting comprises determining a location of a disk that is connected to a screw.
